# FASCICULE DE BREVET EUROPEEN

(11) **EP 3 635 302 B1**
(45) Date de publication et mention de la délivrance du brevet: **17.11.2021**
(21) Numéro de dépôt: 18729325.3
(22) Date de dépôt: 09.05.2018
(51) Int. Cl.: F24T 10/10

(54) **STATION DE RÉCUPÉRATION D'ÉNERGIE GÉOTHERMIQUE ET DE PRODUCTION D'ÉLECTRICITÉ**
STATION ZUR RÜCKGEWINNUNG VON GEOTHERMISCHER ENERGIE UND ZUR ERZEUGUNG VON ELEKTRIZITÄT
STATION FOR RECOVERING GEOTHERMAL ENERGY AND PRODUCING ELECTRICITY

(30) Priorité: 11.05.2017 FR 1754136
(43) Date de publication de la demande: 15.04.2020
(73) Titulaire: Moranne, Philippe, 31140 Fonbeauzard (FR)
(72) Inventeur: MORANNE, Philippe, 31140 Fonbeauzard (FR)
(74) Mandataire: Plasseraud IP
(86) Numéro de dépôt international: PCT/EP2018/062153
(87) Numéro de publication internationale: WO 2018/206733

(56) Documents cités:
- WO-A1-2014/125288
- DE-A1- 3 627 680
- FR-A1- 2 297 334
- GB-A- 1 496 075
- US-A1- 2011 247 328
- US-B1- 7 251 938

## Description

La présente invention concerne une station de récupération d'énergie géothermique et de production d'électricité.

Dans le sous-sol terrestre, la température augmente progressivement à fur et à mesure que l'on s'éloigne de la surface du sol. À partir d'une certaine profondeur, les températures deviennent sensiblement supérieures aux températures régnant à la surface. Le sous-sol constitue ainsi une source d'énergie thermique. Cette source présente l'avantage d'être renouvelable et est de ce fait respectueuse de l'environnement.

Il est déjà connu d'exploiter cette énergie en creusant des trous profonds afin d'accéder par exemple à une source d'eau chaude. Lorsque l'eau est en phase gazeuse, cette vapeur d'eau (sous pression) peut être utilisée pour entraîner une turbine et produire de l'électricité. L'eau chaude, en phase gazeuse ou liquide, peut aussi être utilisée comme moyen de chauffage.

Le document WO-2014/125288 par exemple divulgue un système d'extraction d'énergie géothermique comprenant une conduite à l'intérieur d'un puits creusé. La conduite comprend une section alimentation descendante sensiblement verticale et une section extraction ascendante. Au moins une partie des deux sections verticales est située dans une zone géothermique souterraine. Une pluralité de ramifications s'étendent depuis le puits dans la zone géothermique. Les ramifications sont chacune remplies d'un matériau thermoconducteur.

Un inconvénient d'un tel dispositif de l'art antérieur est que le rendement, entre l'énergie disponible à la source et l'énergie effectivement utilisée, est relativement faible. Une partie non négligeable de l'énergie est en effet dissipée entre la source d'énergie et le lieu de récupération de cette énergie.

Le document US2011/247328 divulgue un système d'énergie géothermique destiné à la production d'énergie et, en particulier, à la production d'énergie électrique, qui exploite des sources d'énergie géothermique naturelles. Elle propose un procédé d'identification et de transformation de formations géologiques artificielles ou naturelles en sources importantes d'énergie qui, dans le même temps, apporte des mesures d'assainissement de l'environnement et de correction des situations dangereuses. Un flux d'air induit est produit par exploitation de l'air en surface qui est sensiblement plus froid que la température géothermique souterraine. Ce flux d'air induit naturellement est maîtrisé pour alimenter en énergie les centrales du système de production d'énergie électrique. Le système comprend un système hydroélectrique, un puits géothermique, des systèmes de récupération de chaleur, une source de matière de biomasse renouvelable et des systèmes de d'assainissement de l'air et de l'eau.

Le document US7,251,938 concerne quant à lui un système de récupération et de conversion d'énergie géothermique à partir de roches géologiquement stables, chaudes et sèches. Des forages profonds sont forés pour former un système de conduits d'alimentation et de retour dans la formation non poreuse. Le fluide passe à travers les conduits où l'énergie thermique est transférée au fluide en mouvement. Le conduit de retour amène le fluide chaud à une station de conversion d'énergie située sous terre où l'énergie thermique est convertie en énergie électrique. L'énergie du générateur et de l'eau chaude est fournie à la communauté pour utilisation. Pour former les trous de forage profonds, une série de trous de forage de grand diamètre est forée, et la plate-forme est descendue à intervalles jusqu'à ce que l'environnement devienne intolérable. À cette profondeur, un trou de forage final est foré pour atteindre le niveau de température optimal. Le système de cette invention exploite une source d'énergie illimitée dans ce pays et accomplit ceci d'une manière à la fois rentable et écologique.

Le document FR2297334 divulgue quant à lui un système de production d'énergie hydraulique réalisé dans une enceinte géothermique isotherme permettant d'obtenir une température ambiante élevée et une grande hauteur de chute.

La présente invention a alors pour but d'optimiser la récupération d'énergie dans un puits creusé dans le sol pour récupérer de l'énergie géothermique.

Un autre but de la présente invention est de fournir une station de récupération d'énergie géothermique de grande puissance.

À cet effet, la présente invention propose une station de récupération d'énergie géothermique et/ou de production d'électricité comportant un puits foré verticalement depuis la surface terrestre et à partir duquel s'étendent des ramifications, le puits foré verticalement est un puits d'un diamètre supérieur à 2m.

Selon la présente invention, l'espace intérieur d'au moins certaines ramifications est en relation fluidique avec un réservoir collecteur placé dans le puits, et ladite station comporte en outre une boucle fluidique fermée avec un dispositif de récupération d'énergie disposé dans le puits, une première liaison fluidique entre le réservoir collecteur et le dispositif de récupération d'énergie et une seconde liaison fluidique entre le dispositif de récupération d'énergie et le réservoir collecteur.

Ainsi, la récupération d'énergie a lieu dans le puits, au plus près de la source d'énergie. Il est ainsi possible d'optimiser le rendement d'un processus de récupération d'énergie en limitant les pertes.

Le dispositif de récupération d'énergie peut être par exemple un échangeur de chaleur, un moteur à vapeur, ....

Si les ramifications sont réalisées dans un sol qui n'est pas étanche au liquide, alors pour étanchéifier ces ramifications, des tubes, de préférence métalliques, sont par exemple placés dans des ramifications et ces tubes sont alors reliés avec un réservoir collecteur. L'espace intérieur des tubes correspond à l'espace intérieur des ramifications.

Selon une première forme de réalisation correspondant à une forme de réalisation préférée, le dispositif de récupération d'énergie comporte une turbine reliée à un alternateur et un condenseur. Dans cette forme de réalisation, on réalise alors de manière tout à fait originale, dans le puits même, de l'électricité et c'est donc l'énergie « transformée » qui est envoyée du fond du puits vers la surface et non pas de l'énergie primaire.

Selon cette première forme de réalisation, le condenseur est avantageusement refroidi par un échangeur de chaleur. Ce même échangeur de chaleur peut aussi être utilisé pour refroidir une enceinte dans laquelle se trouve l'alternateur. Une partie de l'énergie géothermique pourra aussi être récupérée au niveau de cet échangeur de chaleur. Selon la profondeur du puits et la position du condenseur, plusieurs échangeurs de chaleur successifs s'étendant entre la surface terrestre et le condenseur pourront éventuellement être prévus.

Toujours dans cette première forme de réalisation, dans laquelle l'énergie géothermique est transformée en électricité par l'intermédiaire d'une turbine, d'un alternateur et d'un condenseur, ce dernier est avantageusement disposé entre 10 et 200 m au-dessus du réservoir collecteur. Cette variante de réalisation permet d'éviter l'utilisation d'une pompe de gavage pour faire retourner un condensat vers un réservoir collecteur.

Dans une station selon la présente invention, on prévoit de préférence que le réservoir collecteur est un réservoir de forme torique disposé à la périphérie du puits. Dans ce mode de réalisation, on prévoit que le puits foré au centre de la station reste entièrement libre et ne contient pas d'élément de la station de récupération mais forme simplement un chemin d'accès à tous les éléments de cette station.

De même, pour laisser le puits central libre, on prévoit avantageusement que le dispositif de récupération d'énergie est entièrement logé dans la cavité ménagée dans la paroi du puits foré.

Pour augmenter la puissance de la station, cette dernière comporte par exemple plusieurs réservoirs collecteurs, chaque réservoir collecteur étant associé à un réseau de ramifications. Ces réservoirs collecteurs sont alors avantageusement montés en parallèle.

Selon une forme de réalisation avantageuse d'une station selon l'invention, elle comporte en outre des conduites reliant des éléments disposés dans le puits foré à une installation disposée en surface, et lesdites conduites sont disposées à la périphérie du puits foré en étant de préférence logées dans au moins une rainure longitudinale.

Dans une station telle que décrite précédemment, le fluide utilisé dans le circuit comportant au moins un réservoir collecteur, des tubes s'étendant dans des ramifications, la première liaison, le dispositif de récupération d'énergie et la seconde liaison est par exemple de l'eau.

Des détails et avantages de la présente invention apparaîtront mieux de la description qui suit, faite en référence au dessin schématique annexé sur lequel :
La figure 1 est une vue schématique en élévation (sans échelle) d'une forme de réalisation d'une station de récupération d'énergie géothermique et de production d'électricité,
La figure 2 illustre un dispositif de récupération d'énergie et un circuit l'alimentant,
La figure 3 montre deux réseaux de ramifications associés à deux réservoirs collecteurs en coupe verticale,
La figure 4 est une vue schématique d'un dispositif de récupération d'énergie,
La figure 5 est une vue de dessus du dispositif de récupération d'énergie de la figure 4,
La figure 6 est une vue en coupe à échelle agrandie selon la ligne de coupe VI-VI de la figure 2, et
La figure 7 est une vue en coupe à échelle agrandie selon la ligne de coupe VII-VII de la figure 2.

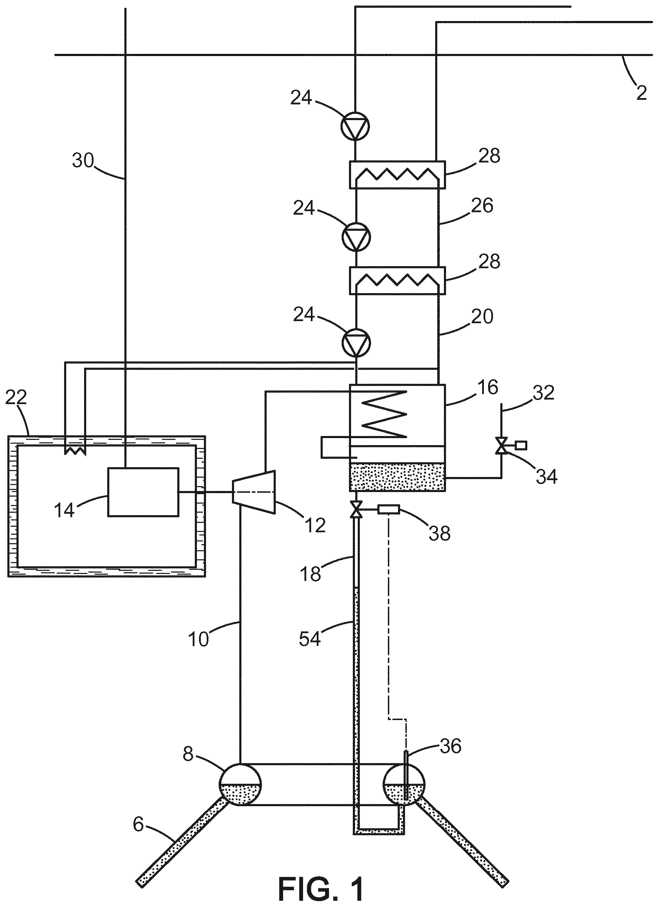

La figure 1 est une vue d'ensemble très schématique d'une station de récupération d'énergie géothermique qui permet d'obtenir, d'une part, de l'électricité et, d'autre part, de l'eau réchauffée valorisable.

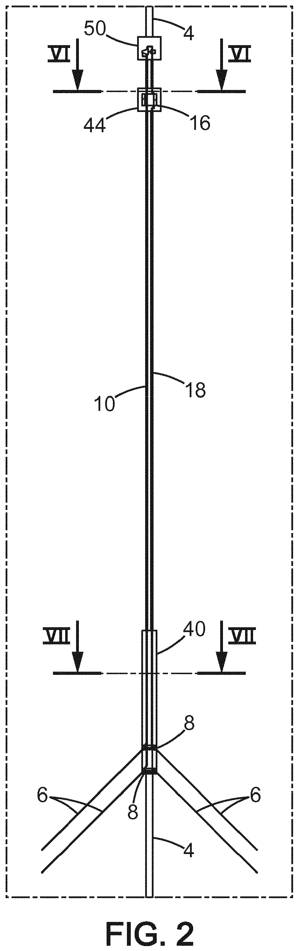

Une ligne 2 sur la figure 1 schématise la surface terrestre. À partir de cette surface, un puits 4 (figures 2 et 5 à 7) de grand diamètre et de grande profondeur est creusé à la verticale. On a ainsi un trou (puits) qui s'étend continûment à la verticale depuis le sol. On reconnait, sur la figure 2, des ramifications 6 qui s'étendent à partir du puits vers le bas. Dans le mode de réalisation illustré, deux modules géothermiques sont disposés à une hauteur intermédiaire dans le puits et disposés à une profondeur telle que la température environnante correspond à la température d'exploitation souhaitée.

Le puits 4 a un diamètre supérieur à 2 m. Il mesure par exemple entre 2 et 3 m de diamètre, de préférence entre 2,3 et 2,6 m de diamètre. Il s'étend sur une profondeur de préférence supérieure à 1.000 m, de préférence allant jusqu'au-delà de 5.000 m.

Pour réaliser un tel puits, il est proposé d'utiliser un dispositif de forage qui réalise le trou en faisant tourner autour d'un axe de rotation un outil de forage dans sol.

Il est proposé ici de réaliser les trous dans le sol à l'aide d'un dispositif de forage tel celui décrit dans le document WO-2013/057442. Le procédé de forage des trous est alors par exemple un procédé tel celui décrit sur les pages 9 à 13 de ce document de l'art antérieur dont le contenu est intégré ici par référence. Ce procédé permet de réaliser, étape par étape, des trous de diamètre important et aussi de grande profondeur en extrayant des blocs cylindriques de matériau naturel. Il est proposé ici de réaliser des trous dont le diamètre est de l'ordre de 2 à 3 mètres (m).

Les ramifications 6 sont de diamètres moindres par rapport au puits 4. Leur diamètre est par exemple compris entre 0,1 et 0,5 m, par exemple environ 0,2 m. Les ramifications 6 s'étendent à partir du puits 4 vers le bas, l'axe des ramifications faisant par exemple un angle de 45° avec l'axe du puits 4.

Les ramifications 6 sont forées à partir de la paroi du puits 4. Elles sont ensuite tubées de manière à présenter une surface étanche aux liquides. De préférence, le matériau utilisé pour les tubes 7 est un matériau conducteur de la chaleur tel un métal. Si des ramifications 6 présentent une paroi étanche, par exemple si la ramification est forée dans une roche telle du granit, alors on peut envisager de ne pas tuber ladite ramification.

Le but de ces ramifications 6 est de créer une surface d'échange entre une zone géothermique et la station de récupération d'énergie. Le forage des ramifications 6 ne permettant pas d'obtenir une surface bien lisse, pour favoriser les échanges thermiques, il peut être prévu de remplir l'espace entre le tube 7 et la ramification 6 avec un matériau conducteur pouvant être injecté entre le tube 7 et la paroi de la ramification 6.

On suppose dans la figure 1 qu'il y a un premier réseau de ramifications 6 toutes disposées à une même profondeur dans le puits 4 et régulièrement réparties à la périphérie du puits 4.

Tous les tubes 7 de ce premier réseau de ramifications 6 sont raccordés fluidiquement avec un réservoir collecteur 8, c'est-à-dire que du fluide se trouvant dans les tubes 7 peut passer dans le réservoir collecteur 8 et inversement. On forme ainsi un module géothermique comportant un réservoir collecteur et un réseau de ramifications raccordées à ce réservoir collecteur.

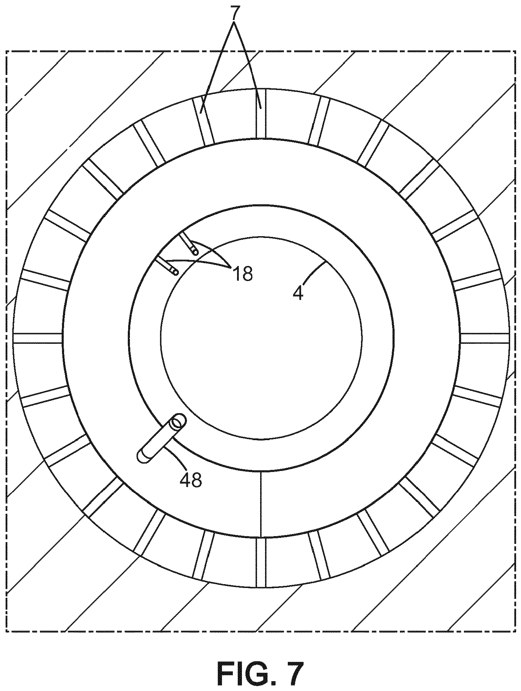

Le réservoir collecteur 8 (figures 1 et 7) se présente par exemple sous la forme d'un tore de section circulaire (ou autre) disposé autour du puits 4. On peut par exemple prévoir un tore présentant une section circulaire d'environ 0,6 à 0,8 m, le centre de cette section se trouvant sur un cercle d'environ 4 m de diamètre. Le volume du tore est dimensionné en fonction de la longueur et du nombre de ramifications, c'est-à-dire de l'énergie (ou puissance) géothermique pouvant être transférée par la surface d'échange des tubes 7 dans les ramifications 6.

Les tubes 7 des ramifications 6 sont reliés au réservoir collecteur 8 sur la moitié inférieure de celui-ci. Sur la moitié supérieure du réservoir collecteur 8 se trouve au moins une sortie connectée à une première liaison 10 reliant le réservoir collecteur 8 à l'entrée d'une turbine de détente 12. Cette dernière entraine en rotation un arbre sur lequel est monté un alternateur 14.

La turbine de détente 12 est branchée en sortie en série avec un condenseur 16 dont une sortie est reliée par une seconde liaison 18 au réservoir collecteur 8. On réalise ainsi une boucle fermée comportant le réservoir collecteur 8, la première liaison 10, la turbine de détente 12, la liaison entre cette dernière et le condenseur 16, le condenseur 16 et le retour par la seconde liaison 18 au réservoir collecteur 8. Cette boucle fermée est entièrement disposée sous la surface terrestre, et même à plusieurs centaines, voire milliers de mètres sous cette surface terrestre.

Une première boucle 20, fermée également, dans laquelle circule de l'eau forme un réseau de refroidissement pour réaliser un échange thermique, d'une part, avec le condenseur 16 et, d'autre part, avec une enceinte isolante 22 disposée autour de l'alternateur 14 pour éviter une surchauffe de celui-ci. Une pompe 24 fait circuler de l'eau dans la première boucle 20.

Compte tenu de la profondeur du puits 4, il est nécessaire de prévoir plusieurs boucles de refroidissement 26 successivement depuis la surface du puits jusqu'au condenseur 16. Chacune de ces boucles est de préférence une boucle fermée. Entre deux boucles de refroidissement 26 voisines se trouve à chaque fois un échangeur 28 pour refroidir le liquide dans la boucle de refroidissement 26 inférieure. Une pompe 24 est prévue dans chaque boucle de refroidissement 26 pour faire circuler le liquide (de l'eau) dans les boucles. La hauteur d'une boucle de refroidissement 26 est telle que la pression au niveau des échangeurs 28 correspondent à la pression de service de ces échangeurs. Une hauteur d'environ 1.000 m peut être envisagée ici.

Au niveau de la surface de la Terre, l'eau issue du dernier échangeur 28 peut être alors valorisée et être utilisée par exemple pour du chauffage domestique ou industriel ou de la production d'eau chaude sanitaire.

Les différentes boucles de refroidissement 26 sont logées dans des rainures prévues à cet effet dans la paroi du puits 4 de manière à laisser le passage complet sur toute la section du puits 4.

À partir de l'alternateur 14, un câble 30 fixé à intervalles réguliers sur la paroi du puits 4 permet d'amener à la surface l'électricité produite dans le fonds du puits 4.

Dans le circuit formé par le réservoir collecteur 8, la première liaison 10, la turbine de détente 12, le condenseur 16 et la seconde liaison 18, il est prévu de faire si nécessaire un appoint en eau, de préférence de l'eau traitée. Une conduite d'amenée 32 d'eau munie d'une vanne 34 commandée à distance permet de rajouter de l'eau dans ledit circuit. Un contrôle de niveau d'eau par une sonde 36 peut être réalisé dans le réservoir collecteur 8. Un dispositif de régulation 38 disposé entre le condenseur 16 et le réservoir collecteur 8 a alors pour but de maintenir un niveau d'eau sensiblement constant dans le circuit.

Les figures 2 à 7 montrent des détails de réalisation d'une forme de réalisation d'une station de récupération d'énergie d'origine géothermique.

La figure 2 montre la partie inférieure du puits 4. En partie basse du puits 4, on reconnait deux réseaux de ramifications 6. Chaque ramification 6 est ici tubée et reliée à un réservoir collecteur 8. Pour loger ces collecteurs, le puits 4 présente une première zone élargie 40. La figure 7 illustre également cette première zone élargie 40. On trouve sur cette figure au centre le puits 4, autour de ce puits, en vue de dessus, un réservoir collecteur 8 duquel s'étendent radialement, en vue de dessus, les tubes 7 des ramifications 6.

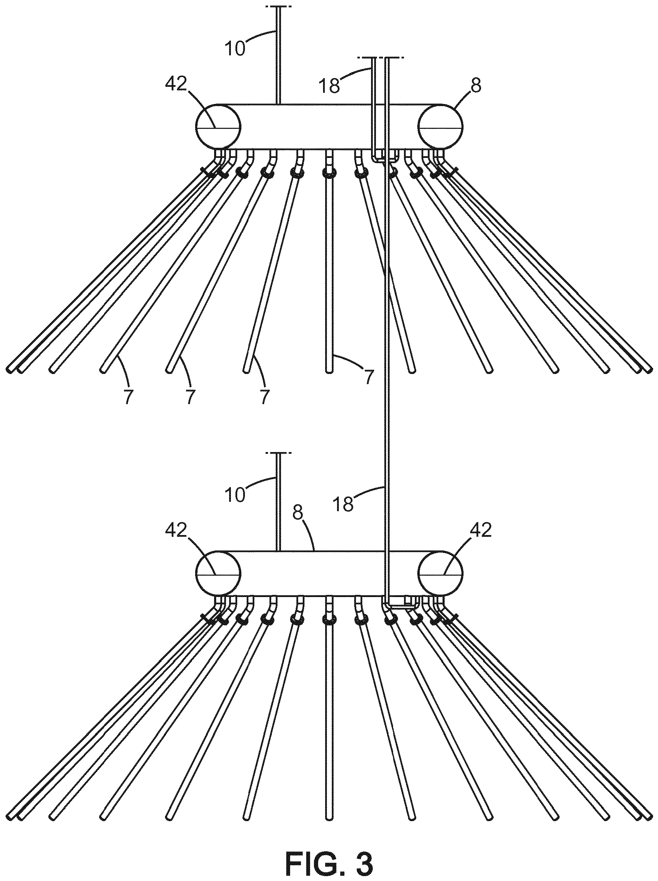

La figure 3 montre deux réservoirs collecteurs 8 qui sont espacés l'un de l'autre verticalement de plusieurs mètres, voire plusieurs dizaines de mètres. À titre purement illustratif, on peut par exemple prévoir une distance de l'ordre de 10 mètres entre les deux réservoirs collecteurs 8. Cette figure 3 montre des raccords entre les réservoirs collecteurs 8 et, d'une part, les tubes 7 et, d'autre part, la première liaison 10 et la seconde liaison 18. Elle montre en outre une limite 42 entre une phase liquide et une phase gazeuse (vapeur) d'eau contenue dans chaque réservoir collecteur 8. La première liaison 10 est reliée au réservoir collecteur 8 correspondant au niveau de la zone de ce réservoir supposée contenir de la vapeur tandis que les autres raccords se fond dans une zone du réservoir supposée contenir du liquide.

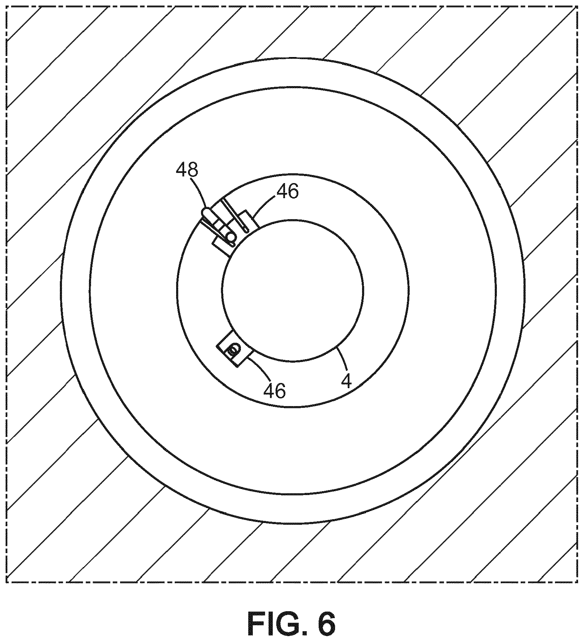

Plus haut dans le puits 4 (figure 2), se trouve une deuxième zone élargie 44 pour loger le condenseur 16. Ce dernier est formé par un ensemble d'échangeurs thermiques qui sont logés dans la deuxième zone élargie, à la périphérie du puits 4 sans faire saillie dans celui-ci de manière à laisser entièrement libre le passage vertical réalisé par ce puits. Les diverses canalisations reliées ou non au condenseur 16 sont disposées dans des rainures 46 verticales creusées dans la paroi du puits 4 (figure 6). Dans la forme de réalisation illustrée, une première rainure 46 reçoit en dessous du condenseur 16 les canalisations correspondant à la seconde liaison (retour liquide vers le réservoir collecteur 8) et au-dessus du condenseur 16 une canalisation 48 alimentant depuis la turbine de détente 12 le condenseur 16 en vapeur basse pression. Une seconde rainure 46 loge la première liaison 10 qui alimente en vapeur haute pression la turbine de détente 12.

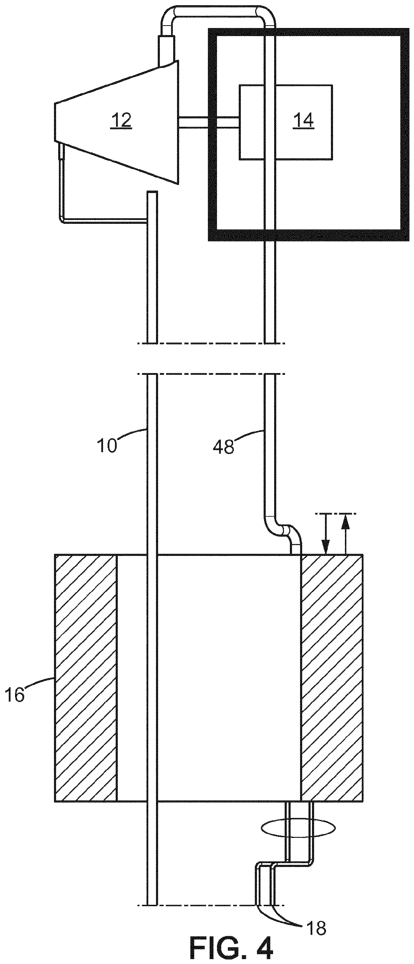

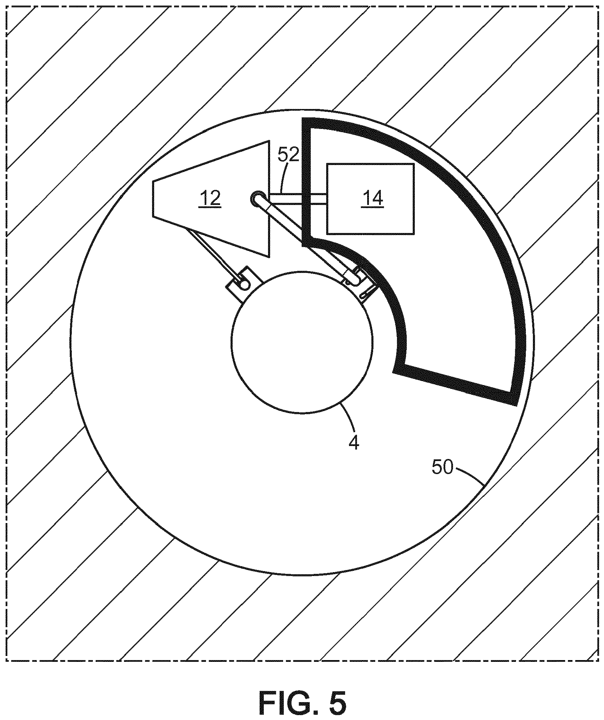

Enfin, la figure 2 montre une troisième zone élargie 50 logeant la turbine de détente 12 et l'alternateur 14 couplé à celle-ci. Les figures 4 et 5 illustrent à plus grande échelle l'intérieur de cette troisième zone élargie 50. Ici aussi on remarque que la turbine de détente 12 reliée par un arbre 52 ainsi que les canalisations les raccordant ne font pas saillie à l'intérieur du puits 4.

Le fonctionnement de cette station est alors le suivant.

Le puits 4 est creusé à une profondeur telle que les ramifications 6 se trouvent dans une zone géothermique où la température est sensiblement supérieure à 100°C afin de permettre de faire passer de l'eau en phase vapeur. La température est de préférence comprise entre 150 et 180°C.

Grâce à la grande surface d'échange des tubes 7, une quantité d'énergie importante peut être communiquée à l'eau se trouvant dans lesdits tubes. Par gravité, la vapeur formée monte et se retrouve alors dans le réservoir collecteur 8 correspondant. Au sein de ce réservoir règne une pression qui est maîtrisée, par exemple entre 10 et 15 bars (c'est-à-dire de l'ordre de 1 à 1,5 MPa). La maitrise de la pression se fait en gérant le prélèvement de vapeur dans le réservoir collecteur 8 et le retour d'eau en provenance du condenseur 16.

La turbine de détente 12 se trouve au-dessus du condenseur 16, par exemple environ 10 m au-dessus de celui-ci. Le condenseur quant à lui se trouve par exemple de 10 à 200 m, de préférence environ 100 à 150 m au-dessus du réservoir collecteur 8. Compte tenu de la densité de la vapeur d'eau, il n'y a pas beaucoup de perte de charge entre le réservoir collecteur 8 et la turbine de détente 12. S'il y a plusieurs réseaux de ramifications 6, il est prévu de préférence une seule première liaison 10 commune pour amener la vapeur d'eau à la turbine de détente 12. La taille de cette dernière est adaptée en fonction du flux de vapeur. La vapeur entraîne la turbine de détente 12 et le travail récupéré est transmis directement à l'alternateur 14 et converti en énergie électrique. C'est alors sous forme électrique que l'énergie est transportée jusqu'à la surface. De la sorte, les pertes sont bien moindres qu'en amenant de l'eau chaude jusqu'en haut du puits.

En sortie de la turbine de détente 12, la vapeur d'eau est à une pression maîtrisée par la température régnant dans le condenseur. Cette vapeur d'eau est alors condensée en phase liquide dans le condenseur 16. Cette condensation est possible grâce au refroidissement apportée par la première boucle 20 elle-même refroidie par les boucles de refroidissement 26.

Le condenseur 16 est disposé à une altitude telle par rapport au réservoir collecteur 8 qu'il soit inutile de prévoir une pompe de gavage pour réintroduire de l'eau dans le réservoir collecteur 8. On remarque sur la figure 1 une colonne d'eau 54 (ou colonne de condensat) dont la hauteur correspond à la pression régnant dans le réservoir collecteur 8.

Si nécessaire, un apport en eau est réalisé. La sonde 36 contrôle le niveau d'eau dans le réservoir collecteur 8 et si le niveau mesuré est trop bas, de l'eau est rajoutée par l'intermédiaire de la conduite d'amenée 32 et de la vanne 34.

La boucle de refroidissement supérieure, au niveau de la surface terrestre (ligne 2) est alimentée en eau froide et fournit de l'eau chaude qui peut être valorisée comme eau chaude sanitaire, comme eau chaude pour du chauffage collectif pour habitations ou du chauffage industriel. Cette boucle de refroidissement peut aussi être une boucle fermée avec un autre échangeur de chaleur.

Le système décrit est un système modulaire. En effet, il est possible de prévoir des ramifications à divers niveaux. Un réseau de ramifications pourrait par exemple être prévu à une profondeur donnée, par exemple à partir de 2.000 m, pour la production d'eau chaude sanitaire. Dans une zone à forte activité volcanique, une profondeur moindre pourra déjà permettre d'obtenir de l'eau chaude sanitaire. Au lieu de prévoir une turbine couplée à un alternateur, on pourrait faire circuler de l'eau dans les ramifications et ainsi récupérer de l'énergie au sein d'un échangeur de chaleur pour produire de l'eau chaude sanitaire, ou de l'eau pour du chauffage par exemple.

On peut même prévoir de se servir du puits 4 comme d'un puits canadien pour la production d'eau rafraîchie (à environ 13-15 °C). À cet effet, un réseau de ramifications pourra être réalisé à une profondeur comprise entre quelques mètres et 200m.

De façon générale, il suffit de positionner un réseau de ramifications à une profondeur définie pour obtenir une température d'exploitation souhaitée (à partir de 13 °C).

L'avantage du système proposé est que le puits 4 central reste toujours entièrement accessible. Il forme un tunnel d'accès pour tout d'abord former une zone élargie et ensuite équiper cette zone de moyens de récupération d'énergie (échangeur de chaleur et/ou générateur électrique).

Le système est modulable aussi dans sa puissance : un même puits peut servir de base à plusieurs réseaux de ramifications à des profondeurs diverses. La puissance est ensuite proportionnelles à la surface d'échange réalisée au niveau des ramifications.

En fonction de la puissance, il peut être envisagé d'avoir deux, ou plusieurs, turbines de détente et alternateurs. On peut tout d'abord prévoir un générateur électrique dans un puits, le mettre en service et par la suite installer et mettre en service un second générateur électrique (sans avoir a priori à faire cesser le fonctionnement du premier générateur électrique).

Le cycle thermodynamique proposé est un système connu et pouvant être mis en œuvre avec du matériel connu et de fiabilité éprouvée. L'architecture est même un peu simplifiée afin d'augmenter encore la fiabilité du système puisque la pompe de gavage est supprimée. L'absence de cette pompe permet aussi d'améliorer (un peu) le rendement du cycle.

Le circuit proposé est entièrement fermé. Seul un appoint d'eau est prévu. Il ne s'agit pas ici d'injecter de l'eau dans le sol et de la récupérer chaude ... mais avec des impuretés, un pH non maîtrisé, .... Un seul circuit primaire est utilisé ici. Il n'y a pas comme dans certains systèmes un circuit primaire venant réchauffer un fluide d'un circuit secondaire, la production d'électricité étant assurée sur le circuit secondaire.

La conception de la station avec un puits central de grand diamètre (supérieur à 2 m), s'étendant verticalement à partir de la surface terrestre, permet de disposer dans le puits d'un espace de travail suffisant pour y descendre divers outils permettant, d'une part, d'élargir localement le puits et, d'autre part, de réaliser le forage des ramifications en faisant descendre dans le puits une foreuse « classique » pour réaliser des forages d'un diamètre de l'ordre de quelques dizaines de centimètres.

Bien entendu, la présente invention ne se limite pas à la forme de réalisation préférée décrite ci-dessus et aux variantes de réalisation évoquées mais elle concerne aussi toutes les variantes à la portée de l'homme du métier dans le cadre des revendications ci-après.

## Revendications

1. Station de récupération d'énergie géothermique et/ou de production d'électricité comportant un puits (4) foré verticalement depuis la surface terrestre et à partir duquel s'étendent des ramifications (6),
le puits (4) foré verticalement est un puits d'un diamètre supérieur à 2 m,
**caractérisée en ce que** l'espace intérieur d'au moins certaines ramifications (6) est en relation fluidique avec un réservoir collecteur (8) placé dans le puits (4), et
**en ce que** ladite station comporte en outre une boucle fluidique fermée avec un dispositif de récupération d'énergie (12, 14, 16) disposé dans le puits (4), une première liaison (10) fluidique entre le réservoir collecteur (8) et le dispositif de récupération d'énergie (12, 14, 16) et une seconde liaison (18) fluidique entre le dispositif de récupération d'énergie (12, 14, 16) et le réservoir collecteur (8).

2. Station selon la revendication 1, **caractérisée en ce que** des tubes (7) sont placés dans des ramifications (6), lesdits tubes étant reliés avec le réservoir collecteur (8).

3. Station selon l'une des revendications 1 ou 2, **caractérisée en ce que** le dispositif de récupération d'énergie comporte, d'une part, une turbine (12) reliée à un alternateur (14) et, d'autre part, un condenseur (16).

4. Station selon la revendication 3, **caractérisée en ce que** le condenseur (16) est refroidi par un échangeur de chaleur (20).

5. Station selon la revendication 4, **caractérisée en ce que** l'alternateur (14) est disposé dans une enceinte (22) refroidie par l'échangeur de chaleur (20) refroidissant le condenseur (16).

6. Station selon l'une des revendications 4 ou 5, **caractérisée en ce que** plusieurs échangeurs de chaleur (20, 26) successifs s'étendent entre la surface terrestre et le condenseur (16).

7. Station selon l'une des revendications 3 à 6, **caractérisée en ce que** le condenseur (16) est disposé entre 10 et 200 m au-dessus du réservoir collecteur (8).

8. Station selon l'une des revendications 1 à 7, **caractérisée en ce que** le réservoir collecteur (8) est un réservoir de forme torique disposé à la périphérie du puits (4).

9. Station selon l'une des revendications 1 à 8, **caractérisée en ce que** le dispositif de récupération d'énergie est entièrement logé dans une cavité (44, 50) ménagée dans la paroi du puits (4) foré.

10. Station selon l'une des revendications 1 à 9, **caractérisée en ce qu'**elle comporte plusieurs réservoirs collecteurs (8), chaque réservoir collecteur (8) étant associé à un réseau de ramifications (6).

11. Station selon l'une des revendications 1 à 10, **caractérisée en ce qu'**elle comporte en outre des conduites (30) reliant des éléments disposés dans le puits foré à une installation disposée en surface, et **en ce que** lesdites conduites (30) sont disposées à la périphérie du puits (4) foré dans au moins une rainure longitudinale.

12. Station selon l'une des revendications 1 à 11, **caractérisée en ce qu'**elle présente en son centre un passage dont le diamètre correspond au diamètre du puits.

13. Station selon la revendication 12, **caractérisée en ce que** toutes les canalisations de fluides (eau, vapeur, électricité, ...) sont disposées au moins partiellement dans des rainures ménagées dans la paroi du puits autour du passage.

14. Station selon l'une des revendications 1 à 13, **caractérisée en ce que** la boucle fluidique fermée comportant le dispositif de récupération d'énergie (12, 14, 16) comporte au moins un second réservoir collecteur (8) monté en parallèle du premier réservoir collecteur (8).

## Patentansprüche

1. Station zur Rückgewinnung von geothermischer Energie und/oder zur Erzeugung von Elektrizität, umfassend einen Schacht (4), der vertikal von der Erdoberfläche aus gebohrt ist und von dem aus sich Verzweigungen (6) erstrecken,
wobei der vertikal gebohrte Schacht (4) ein Schacht mit einem Durchmesser von mehr als 2 m ist,
**dadurch gekennzeichnet, dass** der Innenraum von wenigstens einigen Verzweigungen (6) in Fluidverbindung mit einem Sammelbehälter (8) steht, der in dem Schacht (4) platziert ist, und
dass die Station ferner einen geschlossenen Fluidkreislauf mit einer im Schacht (4) angeordneten Energierückgewinnungsvorrichtung (12, 14, 16), eine erste Fluidverbindung (10) zwischen dem Sammelbehälter (8) und der Energierückgewinnungsvorrichtung (12, 14, 16) und eine zweite Fluidverbindung (18) zwischen der Energierückgewinnungsvorrichtung (12, 14, 16) und dem Sammelbehälter (8) umfasst.

2. Station nach Anspruch 1, **dadurch gekennzeichnet, dass** Rohre (7) in den Verzweigungen (6) platziert sind, wobei die Rohre mit dem Sammelbehälter (8) verbunden sind.

3. Station nach einem der Ansprüche 1 oder 2, **dadurch gekennzeichnet, dass** die Energierückgewinnungsvorrichtung einerseits eine mit einem Wechselstromgenerator (14) verbundene Turbine (12) und andererseits einen Kondensator (16) umfasst.

4. Station nach Anspruch 3, **dadurch gekennzeichnet, dass** der Kondensator (16) durch einen Wärmetauscher (20) gekühlt wird.

5. Station nach Anspruch 4, **dadurch gekennzeichnet, dass** der Wechselstromgenerator (14) in einem Gehäuse (22) angeordnet ist, das durch den Wärmetauscher (20) gekühlt wird, der den Kondensator (16) kühlt.

6. Station nach einem der Ansprüche 4 oder 5, **dadurch gekennzeichnet, dass** sich mehrere aufeinanderfolgende Wärmetauscher (20, 26) zwischen der Erdoberfläche und dem Kondensator (16) erstrecken.

7. Station nach einem der Ansprüche 3 bis 6, **dadurch gekennzeichnet, dass** der Kondensator (16) zwischen 10 und 200 m über dem Sammelbehälter (8) angeordnet ist.

8. Station nach einem der Ansprüche 1 bis 7, **dadurch gekennzeichnet, dass** der Sammelbehälter (8) ein torusförmiger Behälter ist, der am Umfang des Schachts (4) angeordnet ist.·

9. Station nach einem der Ansprüche 1 bis 8, **dadurch gekennzeichnet, dass** die Energierückgewinnungsvorrichtung zur Gänze in einem Hohlraum (44, 50) untergebracht ist, der in der Wand des gebohrten Schachts (4) gebildet ist.

10. Station nach einem der Ansprüche 1 bis 9, **dadurch gekennzeichnet, dass** sie mehrere Sammelbehälter (8) umfasst, wobei jeder Sammelbehälter (8) einem Netz von Verzweigungen (6) zugeordnet ist.

11. Station nach einem der Ansprüche 1 bis 10, **dadurch gekennzeichnet, dass** sie ferner Leitungen (30) umfasst, welche in dem gebohrten Schacht angeordnete Elemente mit einer an der Oberfläche angeordneten Einrichtung verbindet, und dass die Leitungen (30) am Umfang des gebohrten Schachts (4) in wenigstens einer Längsrille angeordnet sind.

12. Station nach einem der Ansprüche 1 bis 11, **dadurch gekennzeichnet, dass** sie in ihrer Mitte einen Durchlass aufweist, dessen Durchmesser dem Durchmesser des Schachts entspricht.

13. Station nach Anspruch 12, **dadurch gekennzeichnet, dass** alle Kanäle für Fluide (Wasser, Dampf, Elektrizität, ...) wenigstens teilweise in Rillen angeordnet sind, die in der Wand des Schachts um den Durchlass gebildet sind.

14. Station nach einem der Ansprüche 1 bis 13, **dadurch gekennzeichnet, dass** der geschlossene Fluidkreislauf, der die Energierückgewinnungsvorrichtung (12, 14, 16) umfasst, wenigstens einen zweiten Sammelbehälter (8) umfasst, der parallel zu dem ersten Sammelbehälter (8) montiert ist.

## Claims

1. A geothermal energy recovery and/or electricity production station including a well (4) drilled vertically from the earth's surface and from which branches (6) extend, the vertically drilled well (4) is a well with a diameter greater than 2 m, **characterised in that** the interior space of at least some branches (6) is in fluid connection with a collecting tank (8) placed in the well (4), and
**in that** said station further includes a closed fluid loop with an energy recovery device (12, 14, 16) disposed in the well (4), a first fluid connection (10) between the collecting tank (8) and the energy recovery device (12, 14, 16) and a second fluid connection (18) between the energy recovery device (12, 14, 16) and the collecting tank (8).

2. The station according to claim 1, **characterised in that** tubes (7) are placed in branches (6), said tubes being connected with the collecting tank (8).

3. The station according to one of claims 1 or 2, **characterised in that** the energy recovery device includes, on the one hand, a turbine (12) connected to an alternator (14) and, on the other hand, a condenser (16).

4. The station according to claim 3, **characterised in that** the condenser (16) is cooled by a heat exchanger (20).

5. The station according to claim 4, **characterised in that** the alternator (14) is disposed in an enclosure (22) cooled by the heat exchanger (20) cooling the condenser (16).

6. The station according to one of claims 4 or 5, **characterised in that** several successive heat exchangers (20, 26) extend between the earth's surface and the condenser (16).

7. The station according to one of claims 3 to 6, **characterised in that** the condenser (16) is disposed between 10 and 200 m above the collecting tank (8).

8. The station according to one of claims 1 to 7, **characterised in that** the collecting tank (8) is a toroid shaped tank disposed at the periphery of the well (4).

9. The station according to one of claims 1 to 8, **characterised in that** the energy recovery device is entirely housed in a cavity (44, 50) formed in the wall of the drilled well (4).

10. The station according to one of claims 1 to 9, **characterised in that** it includes several collecting tanks (8), each collecting tank (8) being associated with a branch (6) network.

11. The station according to one of claims 1 to 10, **characterised in that** it further includes conduits (30) connecting elements disposed in the drilled well to an installation disposed on the surface, and **in that** said conduits (30) are disposed at the periphery of the well (4) drilled in at least one longitudinal groove.

12. The station according to one of claims 1 to 11, **characterised in that** it has at the center thereof a passage whose diameter corresponds to the diameter of the well.

13. The station according to claim 12, **characterised in that** all fluid pipes (water, steam, electricity, ...) are disposed at least partially in grooves formed in the wall of the well around the passage.

14. The station according to one of claims 1 to 13, **characterised in that** the closed fluid loop including the energy recovery device (12, 14, 16) includes at least one second collecting tank (8) mounted in parallel with the first collecting tank (8).
